# EUROPÄISCHE PATENTSCHRIFT

(11) **EP 1 638 374 B1**
(45) Veröffentlichungstag und Bekanntmachung des Hinweises auf die Patenterteilung: **02.05.2007**
(21) Anmeldenummer: 05018091.8
(22) Anmeldetag: 19.08.2005
(51) Int. Cl.: H05B 41/28, H02M 1/00

(54) **Schaltungsanordnung zum Betrieb mindestens einer Lichtquelle mit verbessertem Crest-Faktor**
Circuit arrangement for operating at least a light source with improved crest factor
Dispositif d'alimentation d'au moins une source lumineuse avec facteur de forme amélioré

(30) Priorität: 20.09.2004 DE 102004045514
(43) Veröffentlichungstag der Anmeldung: 22.03.2006
(73) Patentinhaber: Patent-Treuhand-Gesellschaft für elektrische Glühlampen mbH, 81543 München (DE)
(72) Erfinder: Heckmann, Markus, 81539 München (DE)
(74) Vertreter: Raiser, Franz

(56) Entgegenhaltungen:
- EP-A- 0 667 734
- WO-A-02/47441
- WO-A-20/04028218
- US-A- 5 994 847
- US-A1- 2003 071 582
- KHERALUWALA M H ET AL: "Modified valley fill high power factor electronic ballast for compact fluorescent lamps" POWER ELECTRONICS SPECIALISTS CONFERENCE, 1995. PESC '95 RECORD., 26TH ANNUAL IEEE ATLANTA, GA, USA 18-22 JUNE 1995, NEW YORK, NY, USA,IEEE, US, Bd. 1, 18. Juni 1995 (1995-06-18), Seiten 10-14, XP010150531 ISBN: 0-7803-2730-6
- JOOHO SONG; JOONG-HO SONG; CHOY, I.; JU-YEOP CHOI;: "Improving crest factor of electronic ballast-fed fluorescent lamp current using pulse frequency modulation" IEEE TRANSACTIONS ON INDUSTRIAL ELECTRONICS, Bd. 48, Nr. 5, Oktober 2001 (2001-10), Seiten 1015-1024, XP002364831 USA

## Beschreibung

### Technisches Gebiet

Die vorliegende Erfindung betrifft Schaltungsanordnungen für die Leistungsversorgung von Lichtquellen aus einem Versorgungsnetz, die geeignet sind, um einen netzseitigen Leistungsfaktor zu korrigieren. Im Folgenden wird für den Ausdruck Leistungsfaktorkorrektur die Abkürzung PFC verwendet, die sich an den englischsprachigen Ausdruck "Power Factor Correction" anlehnt.

Eine speisende Netzspannung weist eine Netzfrequenz auf. Der Ausdruck "hochfrequent" wird im Folgenden für Frequenzen verwendet, die wesentlich höher sind als die Netzfrequenz.

### Stand der Technik

Aus der Schrift WO 02/47441 (Hu) ist eine o. g. Schaltungsanordnung bekannt. In dieser Schrift sind zwei PFC Technologien offenbart: Eine Ladungspumpe (in der Schrift WO 02/47441 (Hu) "single feedback" genannt) und eine sog. Valley-Fill-Schaltung (in der Schrift WO 02/47441 (Hu) "double pumpe" genannt). Dabei ist die Ladungspumpe der Valley-Fill-Schaltung von der Netzspannung aus gesehen vorgeschaltet. Zudem sind Ladungspumpe und Valley-Fill-Schaltung von der gleichen hochfrequenten Spannungsquelle gespeist.

Ladungspumpen sind z. B. aus der Schrift US 4,949,013 (Zuchtriegel) bekannt. Wesentliches Merkmal einer Ladungspumpe ist die Verschaltung eines Gleichrichterausgangs mit einer Pumpdiode. An die entstehende Verbindungsstelle ist eine hochfrequente Spannung angelegt, die einem Lastkreis entnommen wird. Es soll an dieser Stelle betont werden, dass nur ein Gleichrichterausgang mit einer Pumpdiode verschaltet ist, weshalb dieser Teil der Schaltungsanordnung in WO 02/47441 (Hu) "single feedback" genannt wird.

Valley-Fill-Schaltungen sind z. B. aus der Schrift WO 90/09087 (Skalak) bekannt. Dabei handelt es sich um eine passive PFC-Schaltung aus zwei Speicherkondensatoren und drei Dioden, die zwischen zwei Gleichrichterausgänge geschaltet wird. Die Wirkungsweise der Valley-Fill-Schaltung liegt darin begründet, dass die Speicherkondensatoren über die Dioden so verschaltet sind, dass sie von einer Netzspannung als Serienschaltung geladen werden, jedoch von einer Last als Parallelschaltung entladen werden.

Eine Valley-Fill-Schaltung kann durch Aufspaltung einer ihrer Dioden in zwei Dioden auch als Ladungspumpe wirken. Dazu ist an die Verbindungsstelle der zwei durch Aufspaltung entstandenen Dioden eine hochfrequente Wechselspannung anzulegen. In der Schrift US 6,316,883 (Cho) ist eine derartig modifizierte Valley-Fill-Schaltung beschrieben. Das dort beschriebene Betriebsgerät für Entladungslampen weist zusätzlich auch eine separate Ladungspumpe auf. Diese Ladungspumpe ist der Valley-Fill-Schaltung von der Netzspannungsseite gesehen nachgeschaltet, wodurch ein weiterer Speicherkondensator nötig ist.

In WO 02/47441 (Hu) ist die Ladungspumpe der Valley-Fill-Schaltung vorgeschaltet. Ein weiterer Speicherkondensator ist damit nicht nötig. Die hochfrequente Wechselspannung, die in die Ladungspumpe eingespeist wird, ist aus der hochfrequenten Wechselspannung, die der modifizierten Valley-Fill-Schaltung zugeführt wird, abgeleitet.

Der Schrift WO 02/47441 (Hu) ist zu entnehmen, dass mit der dort beschriebenen Schaltungsanordnung gute Werte für den Leistungsfaktor erreicht werden. Normen wie IEC 61000-3-2 schreiben jedoch zusätzlich Grenzwerte für Netzstrom-Oberschwingungen vor. Dabei wird unterschieden zwischen Lichtquellen, die bis zu 25 W Leistung der Netzspannung entnehmen, und Lichtquellen, die mehr als 25 W entnehmen. Über 25 W sind die Anforderungen wesentlich höher, d. h. die Amplituden der Netzstrom-Oberschwingungen müssen wesentlich geringer sein.

Ein Gegenstand der Schrift WO 02/47441 (Hu) ist eine Kompakt-Leuchtstofflampe mit integriertem Betriebsgerät. Derartige Lampen sind bis zu einer vom Netz aufgenommenen Leistung von 25 W marktüblich. Da bis 25 W die Anforderungen von einschlägigen Nonnen an die Netzstrom-Oberschwingungen gering sind, kann die in WO 02/47441 (Hu) offenbarte Schaltungsanordnung bis 25 W einen mit den Normen konformen Betrieb von Leuchtstofflampen bewerkstelligen.

Die Anforderungen an eine Schaltungsanordnung zum Betrieb von Lichtquellen sind vielfältig. Folgende Anforderungen sind bei der Auslegung dieser Schaltungsanordnungen zu berücksichtigen:
- Hoher netzseitiger Leistungsfaktor
- Niedriger Klirrfaktor (Total Harmonic Distortion: THD) des vom Netz aufgenommenen Stroms
- Normgerechte Netzstromoberschwingungen
- Hoher Wirkungsgrad
- Niedriger Crest-Faktor des Strom durch die Lichtquelle
- Geringe Funkstörungen
- Geringe Kosten
- Geringe geometrische Abmessungen

Zum Betrieb von Leuchtstofflampen mit einer vom Netz aufgenommenen Leistung bis 25 W stellt die in WO 02/47441 (Hu) offenbarte Schaltungsanordnung einen guten Kompromiss dar, um den o. g. Anforderungen gerecht zu werden. Über 25 W stellt jedoch das Einhalten der einschlägigen Normen der Netzstrom-Oberschwingungen ein Problem dar. Speziell für Leuchtstofflampen ist der Crest-Faktor des Lampenstroms durch Normen (z. B. IEC 60929) auf einen Maximalwert von 1,7 begrenzt. Das Einhalten dieses Grenzwerts bei vom Netz aufgenommener Leistung über 25 W stellt ein zusätzliches Problem dar.

Eine Dimensionierung der in der WO 02/47441 (Hu) offenbarten Schaltungsanordnung dahingehend, dass auch bei einer vom Netz aufgenommenen Leistung über 25 W die Normen bezüglich der Netzstrom-Oberschwingungen eingehalten werden, führt zu einer erheblich stärkeren Belastung von Bauelementen der Schaltungsanordnung. Dies führt zu einer Steigerung der Kosten, zu größeren geometrischen Abmessungen und zu einem reduzierten Wirkungsgrad.

Soll zusätzlich der Grenzwert für den Crest-Faktor des Lampenstroms nach IEC 60929 eingehalten werden, so werden die Bauteile noch stärker belastet.

Aus der DE 102004001617 ist eine Schaltungsanordnung zum Betrieb von Lichtquellen bekannt, die zusätzlich zu den Merkmalen, die aus der WO 02/4744 1. (Hu) bekannt sind, eine Ladungspumpe aufweist, die an den negativen Gleichrichterausgang angeschlossen ist. Bei einer derartigen Schaltungsanordnung ist demnach sowohl mit dem positiven als auch mit dem negativen Gleichrichterausgang eine Ladungspumpe verbunden. Damit werden auch bei einer vom Netz aufgenommenen Leistung über 25 W normgerechte Netzstrom-Oberschwingungen und ein normgerechter Lampenstrom-Crest-Faktor bei nur geringen Mehrbelastungen von Bauteilen erreicht.

Schließlich wird auf die DE 102004001618 verwiesen, die ebenfalls eine Weiterbildung einer aus WO 02/47441 (Hu) bekannten Schaltungsanordnung betrifft und unter der Aufgabe steht, auch bei einer vom Netz aufgenommenen Leistung über 25 W einen normgerechten Lampenstrom-Crest-Faktor zu ermöglichen. Dies wird erreicht durch eine Schaltungsanordnung, die zusätzlich zu den Merkmalen, die aus der WO 02/47441 (Hu) bekannt sind, einen zweiten Resonanzkondensator aufweist, der keine Pumpwirkung entfaltet. Ein erster Resonanzkondensator mit Pumpwirkung und ein zweiter Resonanzkondensator ohne Pumpwirkung eröffnen einen Freiheitsgrad, mit dem die Eigenschaften der Schaltungsanordnung besser optimiert werden können.

Es hat sich herausgestellt, dass bei bestimmten Lampen, insbesondere HE-Lampen (HE = High Efficiency), trotz dieser Maßnahmen keine ausreichend niedrigen Lampenstrom-Crest-Faktoren erreicht werden können. Vor allem bei niedrigen Temperaturen besteht sogar die Gefahr eines instabilen stroboskopartigen Lampenbetriebs.

Aus der WO 2004/028218 A1 ist ein elektronisches Vorschaltgerät mit einer Ladungspumpe, insbesondere mit einer Valley-Fill-Schaltung bekannt, bei der der Lampenstrom durch die Primärseite eines Übertragers geführt wird, dessen Sekundärseite als Auskopplungspunkt für die Pumpschaltung verwendet wird. Diese Schaltungsanordnung dient dem Zweck sicherzustellen, dass der Pumpvorgang vom Lampenstrom abhängig gemacht wird, wodurch erreicht wird, dass die Pumpschaltung quasi abgeschaltet wird, wenn kein Lampenstrom fließt.

### Darstellung der Erfindung

Der vorliegenden Erfindung liegt deshalb die Aufgabe zugrunde, eine Schaltungsanordnung zum Betrieb mindestens einer Lichtquelle aufbauend auf die Topologie einer Schaltungsanordnung gemäß WO 02/47441 (Hu) derart weiterzubilden, dass damit die sich beim Betrieb einer Lampe ergebenden Lampen-Crest-Faktoren weiter reduziert werden können.

Diese Aufgabe wird gelöst durch eine Schaltungsanordnung zum Betrieb mindestens einer Lichtquelle mit den Merkmalen von Patentanspruch 1.

Der Erfindung liegt die Erkenntnis zugrunde, dass die Hauptursache für einen hohen Lampen-Crest-Faktor die Modulation der Zwischenkreisspannung ist, wodurch auch der Lampenlastkreis massiv durchmoduliert wird. Erfreulicherweise zeigt die Einhüllende der Spannung am Pumpeinkoppelpunkt, d. h. dem zweiten Knoten, eine entgegengesetzte Modulation. Die Phasenlage dieser hochfrequenten Schwingung ist gegenüber dem Inverterausgang etwas verschoben. Optimal wäre Gegenphasigkeit, um in Kombination mit den gegenläufigen Hüllkurven eine relativ stabile Spannungsdifferenz für den Lastkreis nutzen zu können. Durch eine Phasenverschiebevorrichtung, die ausgelegt ist, eine Vorauseilung um mehr als 90° oder eine Verzögerung der Phase zwischen dem Ankopplungspunkt im Reaktanznetzwerk und dem zweiten Knoten herbeizuführen, lässt sich die Phasenlage am zweiten Knoten günstig beeinflussen. Sie führt daher, je nachdem welcher Aufwand zur Herstellung einer möglichst großen Gegenphasigkeit betrieben wird, zu einer deutlichen Reduktion des Lampen-Crest-Faktors. Zudem kann bei einer mit einer derartigen Schaltungsanordnung betriebenen Lampe je nach Typ und Auslegung eine deutliche Entlastung der Lampendrossel erreicht werden.

Grundsätzlich ist eine Verzögerung der Phase durch die Phasenverschiebevorrichtung zweckgerichtet. Jedoch kann derselbe Effekt, wie für den Fachmann offensichtlich, dadurch erreicht werden, dass durch die Phasenverschiebevorrichtung eine Vorauseilung um mehr als 90° realisiert wird.

In einer besonders kostengünstig zu realisierenden Ausführungsform umfasst die Phasenverschiebevorrichtung eine Induktivität, sie wird insbesondere durch eine einzelne Induktivität realisiert. Bekanntermaßen lässt sich durch die Zwischenschaltung einer Induktivität eine Phasenverzögerung bewirken, die vorliegend bereits zu einer deutlichen Verbesserung des Lampen-Crest-Faktors führt.

Die vorliegende Erfindung kann vorteilhaft auch mit den beiden oben bereits erwähnten Erfindungen gemäß der DE 102004001617.8 und DE 102004001618.6, insbesondere auch in Kombination mit den darin als bevorzugte Ausführungsformen vorgestellten Varianten, verwendet werden: So kann vorgesehen werden, dass die Schaltungsanordnung einen zweiten Pumpkondensator und eine sechste Diode aufweist, wobei der zweite Pumpkondensator mit dem zweiten Knoten und dem negativen Gleichrichterausgang verbunden ist und die sechste Diode zwischen negativem Gleichrichterausgang und die negative Schiene geschaltet ist.

Weiterhin kann vorgesehen werden, dass das Reaktanznetzwerk einen ersten Resonanzkondensator aufweist, der mit seinem ersten Anschluss mit der positiven oder der negativen Schiene verbunden ist, und der mit seinem zweiten Anschluss mit dem zweiten Anschluss der Lampendrossel verbunden ist, sowie einen zweiten Resonanzkondensator, der mit seinem ersten Anschluss mit der Kopplung zwischen dem Reaktanznetzwerk und dem zweiten Knoten verbunden ist, und der mit seinem zweiten Anschluss mit dem zweiten Anschluss der Lampendrossel verbunden ist.

Weiterhin ist bevorzugt, dass die positive und die negative Schiene über einen Kondensator miteinander verbunden sind. Bei geeigneter Dimensionierung wird dadurch erreicht, dass die positive und die negative Schiene bezüglich HF auf im Wesentlichen gleichem Potential liegen.

Bevorzugt ist die Phasenverschiebevorrichtung derart ausgelegt, dass im Bereich von minimaler Netzspannung die Spannungsdifferenz zwischen den Spannungen am Inverterausgang und am zweiten Knoten maximiert wird. Dies hat seine Ursache darin, dass der Arbeitspunkt der zu betreibenden mindestens einen Lampe eine Funktion der Spannungsdifferenz U_{DIFF} wischen der am Inverterausgang vorhandenen Spannung U_{OUT} und der am zweiten Knoten vorhandenen Spannung U_{N2} ist. Der Lampenstrom I_{L} weist eine Hüllkurve auf, in der sich im Wesentlichen sinusförmig Phasen mit großer Amplitude und Phasen mit kleiner Amplitude abwechseln. Während Phasen, in denen der Lampenstrom I_{L} eine große Amplitude aufweist, ist die Spannung U_{N2} am zweiten Knoten ungefähr 0, d. h. die Spannungsdifferenz U_{DIFF} = U_{OUT} - U_{N2} ist im Wesentlichen gleich U_{OUT}., wobei U_{OUT} die Spannung am Inverterausgang ist. In Phasen, in denen die Hüllkurve klein ist, während U_{OUT} zu diesen Zeitpunkten klein ist, ist U_{N2} groß und damit die Spannungsdifferenz U_{DIFF} stark von der Spannung U_{N2} am zweiten Knoten abhängig. Das Ziel besteht nun darin, die Spannungsdifferenz U_{DIFF} auch in den Phasen zu vergrößern, in denen die Hüllkurve des Lampenstroms I_{L} eine kleine Amplitude aufweist. Dies kann dadurch erreicht werden, dass die Phasenlage zwischen U_{OUT} und U_{N2} so gewählt wird, dass es über möglichst große zeitliche Bereiche nicht zu einer Auslöschung kommt, sondern U_{DIFF} maximiert wird. Dadurch, dass U_{DIFF} nunmehr weniger schwankt, wird auch der Lampenstrom-Crest-Faktor reduziert.

Bei einem bevorzugten Anwendungsfall der vorliegenden Erfindung ist die Lichtquelle eine Gasentladungslampe mit heizbaren Wendeln, wobei beim Anschluss der Gasentladungslampe jeweils ein Anschluss einer Wendel mit einer Ausgangsklemme des Reaktanznetzwerks verbunden ist und der jeweils andere Anschluss der Wendeln über einen Kondensator verbunden ist.

Schließlich sei darauf hingewiesen, dass die Phasenverschiebevorrichtung mindestens ein aktives Bauelement umfassen kann, insbesondere zur präzisen Einstellung der gewünschten Phasenverschiebung.

Weitere vorteilhafte Ausführungsformen ergeben sich aus den Unteransprüchen.

### Kurze Beschreibung der Zeichnungen

Im Nachfolgenden wird nunmehr ein Ausführungsbeispiel der Erfindung unter Bezugnahme auf die beigefügten Zeichnungen näher beschrieben. Es zeigen:
- Figur 1: ein Ausführungsbeispiel der Erfindung für eine Leuchtstofflampe mit Elektrodenwendeln; und
- Figur 2: den zeitlichen Verlauf der Spannung U_{OUT} am Inverterausgang sowie der Spannung U_{N2} am zweiten Knoten.

### Bevorzugte Ausführung der Erfindung

Im Folgenden werden Transistoren durch den Buchstaben T, Dioden durch den Buchstaben D, Kondensatoren durch den Buchstaben C, Drosseln durch den Buchstaben L, Widerstände durch den Buchstaben R und Anschlüsse durch den Buchstaben J jeweils gefolgt von einer Zahl bezeichnet.

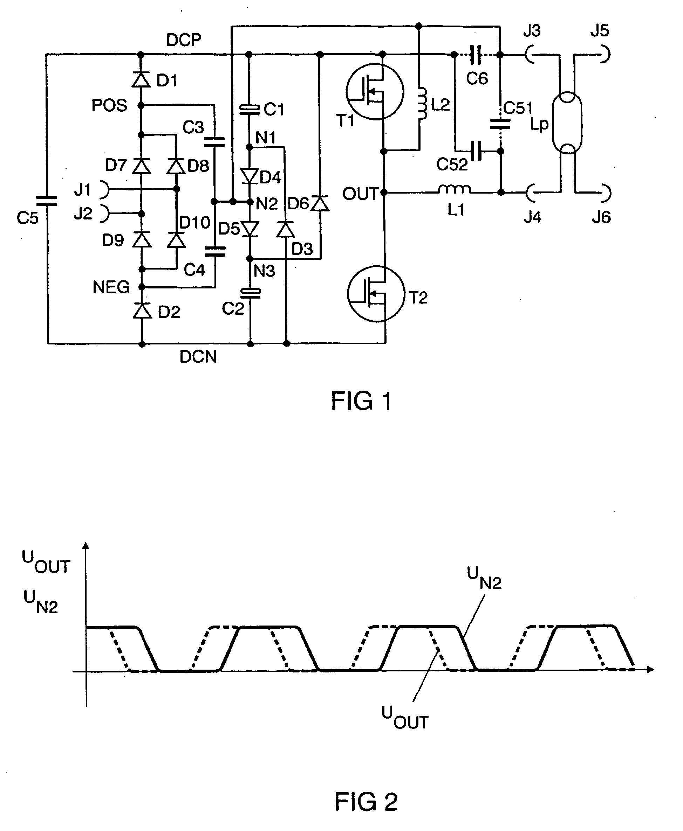

In Figur 1 ist ein Ausführungsbeispiel der Erfindung für eine Leuchtstofflampe mit Elektrodenwendeln dargestellt. Die Anschlüsse J1 und J2 bilden den Netzspannungseingang. An J 1 und J2 ist eine Netzspannung anschließbar. J 1 und J2 sind mit dem Eingang eines Gleichrichters verbunden. Dem Gleichrichter können auch noch Mittel zur Funkentstörung vorgeschaltet sein.

Im Allgemeinen besteht der Gleichrichter aus einer bekannten Brückenschaltung der Gleichrichterdioden D7, D8, D9 und D10, die an ihrem positiven Gleichrichterausgang POS und an ihrem negativen Gleichrichterausgang NEG die gleichgerichtete Netzspannung zur Verfügung stellen. Bedingt durch die Ladungspumpe müssen die Gleichrichterdioden hochfrequent schalten können. Es ist auch möglich, langsame Gleichrichterdioden zu verwenden. Dann muss allerdings jeweils eine schnelle Diode zwischen die Brückenschaltung und den jeweiligen Gleichrichterausgang geschaltet werden.

Eine Diode D1, bei der es sich um eine Pumpdiode handelt, ist mit ihrer Anode mit dem positiven Gleichrichterausgang POS sowie mit ihrer Kathode mit einer positiven Schiene DCP verbunden. Die positive DCP und die negative Schiene DCN sind über den Kondensator C5 miteinander verbunden.

Eine optionale Diode D2, bei der es sich ebenfalls um eine Puinpdiode handelt, ist mit ihrer Kathode mit dem negativen Gleichrichterausgang NEG und mit ihrer Anode mit der negativen Schiene DCN verbunden. Diese Diode D2 kann entfallen, falls kein zweiter, später beschriebener Pumpkondensator C4 vorgesehen ist. Der zweite Pumpkondensator C4 bringt eine weitere Verbesserung bezüglich der Netzstrom-Oberschwingungen und des Lampenstrom-Crest-Faktors ohne größere Belastung der Bauteile.

Zwischen die positive DCP und die negative Schiene DCN ist eine Serienschaltung von vier Dioden D3, D4, D5 und D6 geschaltet, wobei jeweils die Kathode dieser Dioden zur positiven Schiene DCP hin gerichtet ist und die Verbindungsstellen dieser Dioden folgende Knoten ausbilden: Zwischen der Diode D3 und der Diode D4 einen Knoten N1, zwischen der Diode D4 und der Diode D5 einen Knoten N2 und zwischen der Diode D5 und der Diode D6 einen Knoten N3.

Ein erster Speicherkondensator C1 ist zwischen die positive Schiene DCP und den Knoten N1 geschaltet. Ein zweiter Speicherkondensator C2 ist zwischen die negative Schiene DCN und den Knoten N3 geschaltet. Die Dioden D3, D4, D5 und D6 sowie die Speicherkondensatoren C1 und C2 bilden die Valley-Fill-Schaltung. Es handelt sich um eine modifizierte Valley-Fill-Schaltung, wie sie im Zusammenhang mit der oben genannten Schrift US 6,316,883 (Cho) erwähnt wurde. Die Dioden D4 und D5 bilden das oben genannte aufgespaltete Diodenpaar. An den zwischen den Dioden D4 und D5 gelegenen Knoten N2 ist eine hochfrequente Spannung angelegt, die aus dem Lastkreis ausgekoppelt ist. Damit wird auch in der Valley-Fill-Schaltung in begrenztem Maße die Wirkung einer Ladungspumpe erzielt. In Serie zu den Dioden kann auch ein Widerstand geschaltet sein, wodurch sich eine weitere Reduktion der Netzstrom-Oberschwingungen erreichen lässt.

Die Serienschaltung zweier elektronischer Schalter T1 und T2 ist zwischen die positive und die negative Schiene DCP und DCN angeschlossen. T1 und T2 bilden einen Halbbrückeninverter, der am Verbindungspunkt von T1 und T2 einen Inverterausgang OUT aufweist. Über die positive und die negative Schiene DCP und DCN bezieht der Halbbrückeninverter Energie. Durch abwechselndes Ein- und Ausschalten von T1 und T2 liegt am Inverterausgang OUT eine hochfrequente Wechselspannung U_{OUT} gegenüber der negativen Schiene DCN an. Diese Ausgangsspannung U_{OUT} des Inverters weist eine Inverterschwingfrequenz auf, die wesentlich höher ist als die Netzfrequenz. Die negative Schiene DCN dient in diesem Fall als Bezugspotential zur Definition der Ausgangsspannung U_{OUT} des Inverters. Ohne Beschränkung der Allgemeinheit kann auch die positive Schiene DCP als Bezugspotential dienen.

Die Schalter T1 und T2 sind im Ausführungsbeispiel als MOSFET ausgeführt. Es können jedoch auch andere elektronische Schalter verwendet werden. An den Gateanschlüssen von T1 und T2 liegt eine Steuerspannung an, die das abwechselnde Ein- und Ausschalten von T1 und T2 bewirkt. Diese Steuerspannung wird von einer Steuerschaltung bereitgestellt, die in der Figur 1 nicht dargestellt ist. Die Steuerschaltung kann entweder einen freischwingenden Oszillator enthalten oder vom Lastkreis gesteuert sein, wodurch ein aus dem Stand der Technik bekannter, selbstschwingender Halbbrückenwechselrichter gebildet wird.

Am Inverterausgang OUT ist ein Reaktanznetzwerk angeschlossen, dessen Hauptaufgabe es ist, eine Quellimpedanz des Inverterausgangs OUT an eine Lastimpedanz der Lichtquelle Lp anzupassen. Im Ausführungsbeispiel umfasst das Reaktanznetzwerk eine Lampendrossel L1 sowie einen Resonanzkondensator C52. Optional, wie durch strichpunktierte Linien angedeutet, kann ein weiterer Resonanzkondensator C51 und ein Koppelkondensator C6 vorgesehen sein. Diese können jedoch auch durch Leerläufe ersetzt werden. Die Lampendrossel L1 weist einen ersten und einen zweiten Anschluss auf, wobei der erste Anschluss mit dem Inverterausgang OUT verbunden ist. Der zweite Anschluss der Lampendrossel L1 ist einerseits mit einem Anschluss des Resonanzkondensators C52 verbunden, andererseits mit einer Ausgangsklemme J4. J3 und J4 bilden Ausgangsklemmen, an die eine Lichtquelle Lp anschließbar ist. Der Anschluss J3 ist mit dem Knoten N2 verbunden. In der Figur 1 ist beispielhaft für eine Lichtquelle eine Leuchtstofflampe dargestellt. Die Schaltungsanordnung kann grundsätzlich aber auch zum Betrieb anderer Lichtquellen wie z. B. Hochdruckentladungslampen, Leuchtdioden oder Glühlampen verwendet werden. Zum Betrieb von Leuchtdioden oder Glühlampen ist gegebenenfalls ein Transformator vorzusehen, der die Ausgangsspannung U_{OUT} des Inverters an das von den Lichtquellen benötigte Spannungsniveau anpasst. Die in der Figur 1 dargestellte Leuchtstofflampe besitzt zwei Elektrodenwendeln. Anschlüsse der Elektrodenwendeln sind mit den Anschlussklemmen J5 und J6 verbunden. Zwischen diesen kann ein nicht dargestellter Kondensator vorgesehen werden. Ein derartiger Heizkondensator ist für die prinzipielle Funktion der Erfindung jedoch nicht nötig. Mit der vorliegenden Ausführungsform wird ein sogenannter Kaltstart der Lampe ermöglicht. Eine Vorheizung der Wendeln kann auch durch andere aus dem Stand der Technik bekannte Mittel, wie z. B. Transformatoren, bewerkstelligt werden. Die hochfrequente Wechselspannung U_{N2} , die am Knoten N2 anliegt, liegt auch an den Pumpkondensatoren C3 und C4 an. Durch die Verbindung des Knotens N2 über den Pumpkondensator C3 mit dem positiven Gleichrichterausgang POS ist eine erste Ladungspumpe, durch die Verbindung des Knotens N2 über den Pumpkondensator C4 mit dem negativen Gleichrichterausgang NEG ist eine zweite Ladungspumpe realisiert. Bevorzugt weisen die beiden Pumpkondensatoren C3, C4 den gleichen Wert auf. Wie bereits erwähnt, kann einer der beiden Pumpkondensatoren entfallen.

Erfindungsgemäß ist der Inverterausgang OUT über eine Phasenverschiebevorrichtung mit dem Knoten N2 verbunden. Bei der in Figur 1 dargestellten Ausführungsform ist die Phasenverschiebevorrichtung durch eine Induktivität L2 realisiert. Damit lässt sich eine Verzögerung der Phase zwischen dem Inverterausgang OUT und dem Knoten N2 herbeiführen. Wie für den Fachmann offensichtlich, lässt sich ein vergleichbarer Effekt nicht nur durch Verzögerung der Phase erreichen, sondern auch durch entsprechend umfangreiches Vorauseilen. Zur Einstellung einer gewünschten Phasenverschiebung sind unterschiedliche Ausbildungen des Phasenverschiebevorrichtung denkbar, wobei insbesondere auch auf die Realisierung unter Verwendung mindestens eines aktiven Bauelements hingewiesen wird.

In der Figur 1 ist nur eine Lampe Lp abgebildet. Es ist jedoch auch möglich, mehrere Lampen in Serien- oder Parallelschaltung zu betreiben. Insbesondere bei der Serienschaltung wirkt sich die Erfindung vorteilhaft aus. Dies kann damit erklärt werden, dass bei einer Serienschaltung von Lampen die resultierende Lampenspannung im Vergleich zu nur einer Lampe hoch ist, was ohne erfindungsgemäße Maßnahmen zu hohen Bauteilbelastungen führt.

Die hochfrequente Wechselspannung, die dem Knoten N2 zugeführt wird, ist in dem dargestellten Ausführungsbeispiel dem Potential am Inverterausgang OUT entnommen. Der Knoten N2 kann jedoch auch mit anderen Potentialen verbunden werden, die eine hochfrequente Wechselspannung aufweisen.

Figur 2 zeigt den zeitlichen Verlauf der Spannung U_{OUT} am Inverterausgang OUT sowie der Spannung U_{N2} am Knoten N2. Durch die Phasenverschiebevorrichtung wird der zeitliche Verlauf von U_{N2} verzögert, d. h. U_{N2} weiter nach rechts versetzt. Dadurch wird der Effektivwert der Differenzspannung U_{DIFF} = U_{OUT} - U_{N2} vergrößert, im Optimalfall maximiert. Wie bereits ausgeführt, führt eine Vergrößerung von U_{DIFF} während der Phasen mit kleinem U_{OUT} zu einer insgesamt geringeren Modulation von U_{DIFF} und damit zu einem niedrigeren Lampenstrom-Crest-Faktor.

## Patentansprüche

1. Schaltungsanordnung zum Betrieb mindestens einer Lichtquelle umfassend:
- einen Gleichrichter (D7, D8, D9, D10) mit einem Netzspannungseingang (J1, J2), der bei Anlegen einer Netzwechselspannung mit einer Netzfrequenz an seinen Netzspannungseingang an einem positiven (POS) und einem negativen Gleichrichterausgang (NEG) eine gleichgerichtete Netzwechselspannung bereitstellt;
- eine erste Diode (D1), die mit ihrer Anode mit dem positiven Gleichrichterausgang (POS) und mit ihrer Kathode an eine positive Schiene (DCP) gekoppelt ist;
- eine negative Schiene (DCN), die an den negativen Gleichrichterausgang (NEG) gekoppelt ist;
- eine zweite (D3), eine dritte (D4), eine vierte (D5) und eine fünfte Diode (D6), die in Serie zwischen die positive (DCP) und die negative Schiene (DCN) geschaltet sind, wobei jeweils die Kathode dieser Dioden (D3, D4, D5, D6) zur positiven Schiene (DCP) hin gerichtet ist und die Verbindungsstellen dieser Dioden (D3, D4, D5, D6) folgende Knoten ausbilden: zwischen der zweiten (D3) und der dritten Diode (D4) einen ersten Knoten (N1), zwischen der dritten (D4) und der vierten Diode (D5) einen zweiten Knoten (N2) und zwischen der vierten (D5) und der fünften Diode (D6) einen dritten Knoten (N3);
- einen ersten (C1) und einen zweiten Speicherkondensator (C2), wobei der erste Speicherkondensator (C1) zwischen die positive Schiene (DCP) und den ersten Knoten (N1) und der zweite Speicherkondensator (C2) zwischen die negative Schiene (DCN) und den dritten Knoten (N3) geschaltet ist;
- einen Inverter (T1, T2), der zur Energieversorgung an die positive (DCP) und die negative Schiene (DCN) angeschlossen ist und an einem Inverterausgang (OUT) gegenüber der negativen Schiene (DCN) eine Inverterausgangsspannung (UOUT) bereitstellt, die eine Inverterschwingfrequenz aufweist, die wesentlich höher ist als die Netzfrequenz;
- ein Reaktanznetzwerk, das an den Inverterausgang (OUT) angeschlossen ist und Ausgangsklemmen (J3, J4) zum Anschluss der mindestens einen Lichtquelle bereitstellt, wobei das Reaktanznetzwerk eine Lampendrossel (L1) umfasst, die einen ersten und einen zweiten Anschluss aufweist und wobei der erste Anschluss an den Inverterausgang (OUT) gekoppelt ist:
- einen Pumpkondensator (C3), der zwischen den zweiten Knoten (N2) und den positiven Gleichrichterausgang (POS) gekoppelt ist,
- eine Kopplung zwischen dem Reaktanznetzwerk und dem zweiten Knoten (N2), die am zweiten Knoten (N2) gegenüber der negativen Schiene (DCN) einen Spannungsverlauf bewirkt, der die Inverterschwingfrequenz aufweist, wobei in die Kopplung zwischen dem Reaktanznetzwerk und dem zweiten Knoten eine Phasenverschiebevorrichtung (L2) geschaltet ist, wobei die Phasenverschiebevorrichtung (L2) ausgelegt ist, eine Vorauseilung um mehr als 90° oder eine Verzögerung der Phase zwischen dem Ankopplungspunkt im Reaktanznetzwerk und dem zweiten Knoten (N2) herbeizuführen,
**dadurch gekennzeichnet,**
**dass** der Ankopplungspunkt im Reaktanznetzwerk der Inverterausgang (OUT) ist, wobei die Phasenverschiebevorrichtung (L2) zwischen den Inverterausgang (OUT) und den zweiten Knoten (N2) geschaltet ist.

2. Schaltungsanordnung nach Anspruch 1,
**dadurch gekennzeichnet,**
**dass** die Phasenverschiebevorrichtung eine Induktivität (L2) umfasst.

3. Schaltungsanordnung nach einem der Ansprüche 1 oder 2,
**dadurch gekennzeichnet,**
**dass** die Schaltungsanordnung einen zweiten Pumpkondensator (C4) und eine sechste Diode (D2) aufweist, wobei der zweite Pumpkondensator (C4) mit dem zweiten Knoten (N2) und dem negativen Gleichrichterausgang (NEG) verbunden ist und die sechste Diode (D2) zwischen den negativen Gleichrichterausgang (NEG) und die negative Schiene (DCN) geschaltet ist.

4. Schaltungsanordnung nach einem der vorhergehenden Ansprüche,
**dadurch gekennzeichnet,**
**dass** die positive (DCP) und die negative Schiene (DCN) über einen Kondensator (C5) miteinander verbunden sind.

5. Schaltungsanordnung nach einem der vorhergehenden Ansprüche,
**dadurch gekennzeichnet,**
**dass** das Reaktanznetzwerk einen ersten Resonanzkondensator (C52) aufweist, der mit seinem ersten Anschluss mit der positiven (DCP) oder der negativen Schiene (DCN) verbunden ist und der mit seinem zweiten Anschluss mit dem zweiten Anschluss der Lampendrossel (L1) verbunden ist.

6. Schaltungsanordnung nach Anspruch 5,
**dadurch gekennzeichnet,**
**dass** das Reaktanznetzwerk einen zweiten Resonanzkondensator (C51) aufweist, der mit seinem ersten Anschluss mit der Kopplung zwischen dem Reaktanznetzwerk und dem zweiten Knoten (N2) verbunden ist und der mit seinem zweiten Anschluss mit dem zweiten Anschluss der Lampendrossel (L1) verbunden ist.

7. Schaltungsanordnung nach einem der vorhergehenden Ansprüche,
**dadurch gekennzeichnet,**
**dass** die Phasenverschiebevorrichtung (L2) ausgelegt ist, im Bereich von Minima der Netzspannung die Spannungsdifferenz (U_{DIFF})zwischen der Spannung am Inverterausgang (U_{OUT}) und der Spannung (U_{N2}) am zweiten Knoten (N2) zu maximieren.

8. Schaltungsanordnung nach einem der vorhergehenden Ansprüche,
**dadurch gekennzeichnet,**
**dass** die Uchtquelle (Lp) eine Gasentladungslampe ist mit heizbaren Wendeln, wobei beim Anschluss der Gasentladungslampe (Lp) jeweils ein Anschluss einer Wendel mit einer Ausgangsklemme (J3, J4) des Reaktanznetzwerks verbunden ist und die jeweils anderen Anschlüsse (J5, J6) der Wendeln über einen Kondensator verbunden sind.

9. Schaltungsanordnung nach einem der vorhergehenden Ansprüche,
**dadurch gekennzeichnet,**
**dass** die Phasenverschiebevorrichtung mindestens ein aktives Bauelement umfasst.

## Claims

1. Circuit arrangement for operating at least one light source comprising:
- a rectifier (D7, D8, D9, D10) having a system voltage input (J1, J2) which provides a rectified system AC voltage at a positive (POS) and a negative rectifier output (NEG) when a system AC voltage having a system frequency is applied to its system voltage input;
- a first diode (D1) which is coupled with its anode to the positive rectifier output (POF) and with its cathode to a positive rail (DCP);
- a negative rail (DCN) which is coupled to the negative rectifier output (NEG);
- a second (D3), a third (D4), a fourth (D5) and a fifth diode (D6) which are connected in series between the positive (DCP) and the negative rail (DCN), in each case the cathode of these diodes (D3, D4, D5, D6) pointing towards the positive rail (DCP), and the junction points of these diodes (D3, D4, D5, D6) forming the following nodes: a first node (N1) between the second (D3) and the third diode (D4), a second node (N2) between the third (D4) and the fourth diode (D5), and a third node (N3) between the fourth (D5) and the fifth diode (D6);
- a first (C1) and a second storage capacitor (C2), the first storage capacitor (C1) being connected between the positive rail (DCP) and the first node (N1), and the second storage capacitor (C2) being connected between the negative rail (DCN) and the third node (N3) ;
- an inverter (T1, T2) which is connected to the positive (DCP) and the negative rail (DCN) for power supply purposes and provides an inverter output voltage (U_{OUT}), which has an inverter oscillating frequency which is substantially higher than the system frequency, at an inverter output (OUT) opposite the negative rail (DCN);
- a reactance network which is connected to the inverter output (OUT) and provides output terminals (J3, J4) for the purpose of connecting the at least one light source, the reactance network comprising a lamp inductor (L1) which has a first and a second connection, and the first connection being coupled to the inverter output (OUT);
- a pump capacitor (C3) which is coupled between the second node (N2) and the positive rectifier output (POS),
- a coupling between the reactance network and the second node (N2) which brings about a voltage waveform, which has the inverter oscillating frequency, at the second node (N2) opposite the negative rail (DCN), a phase-shifting device (L2) being connected into the coupling between the reactance network and the second node, the phase-shifting device (L2) being designed to bring about a lead of more than 90° or a lag of the phase between the coupling point in the reactance network and the second node (N2), **characterized in that** the coupling point in the reactance network is the inverter output (OUT), the phase-shifting device (L2) being connected between the inverter output (OUT) and the second node (N2).

2. Circuit arrangement according to Claim 1, **characterized in that** the phase-shifting device comprises an inductor (L2).

3. Circuit arrangement according to either of Claims 1 and 2, **characterized in that** the circuit arrangement has a second pump capacitor (C4) and a sixth diode (D2), the second pump capacitor (C4) being connected to the second node (N2) and the negative rectifier output (NEG), and the sixth diode (D2) being connected between the negative rectifier output (NEG) and the negative rail (DCN).

4. Circuit arrangement according to one of the preceding claims, **characterized in that** the positive (DCP) and the negative rail (DCN) are connected to one another via a capacitor (C5).

5. Circuit arrangement according to one of the preceding claims, **characterized in that** the reactance network has a first resonant capacitor (C52) which is connected with its first connection to the positive (DCP) or the negative rail (DCN) and is connected with its second connection to the second connection of the lamp inductor (L1).

6. Circuit arrangement according to Claim 5, **characterized in that** the reactance network has a second resonant capacitor (C51) which is connected with its first connection to the coupling between the reactance network and the second node (N2) and is connected with its second connection to the second connection of the lamp inductor (L1).

7. Circuit arrangement according to one of the preceding claims, **characterized in that** the phase-shifting device (L2) is designed to maximize the voltage difference (U_{DIFF}) between the voltage at the inverter output (U_{OUT}) and the voltage (U_{N2}) at the second node (N2) in the region of minima of the system voltage.

8. Circuit arrangement according to one of the preceding claims, **characterized in that** the light source (Lp) is a gas discharge lamp having heatable filaments, in each case one connection of a filament being connected to an output terminal (J3, J4) of the reactance network and the respective other connections (J5, J6) of the filaments being connected via a capacitor when the gas discharge lamp (Lp) is connected.

9. Circuit arrangement according to one of the preceding claims, **characterized in that** the phase-shifting device comprises at least one active component.

## Revendications

1. Circuit pour faire fonctionner au moins une source lumineuse, comprenant :
- un redresseur (D7, D8, D9, D10) ayant une entrée de tension de réseau (J1, J2), qui fournit une tension alternative de réseau redressée à une sortie de redresseur positive (POS) et à une sortie de redresseur négative (NEG) lorsqu'une tension alternative de réseau ayant une certaine fréquence de réseau est appliquée à son entrée de tension de réseau ;
- une première diode (D1) qui est reliée par son anode à la sortie de redresseur positive (POS) et par sa cathode à une barre positive (DCP) ;
- une barre négative (DCN) qui est reliée à la sortie de redresseur négative (NEG) ;
- une deuxième (D3), une troisième (D4), une quatrième (D5) et une cinquième (D6) diode qui sont branchées en série entre la barre positive (DCP) et la barre négative (DCN), la cathode de ces diodes (D3, D4, D5, D6) étant dirigée à chaque fois vers la barre positive (DCP) et les points de liaison de ces diodes (D3, D4, D5, D6) formant les noeuds suivants : un noeud (N1) entre la deuxième diode (D3) et la troisième diode (D4), un noeud (N2) entre la troisième diode (D4) et la quatrième diode (D5) et un noeud (N3) entre la quatrième diode (D5) et la cinquième diode (D6) ;
- un premier (C1) et un deuxième (C2) condensateur de stockage, le premier condensateur de stockage (C1) étant branché entre la barre positive (DCP) et le premier noeud (N1) et le deuxième condensateur de stockage (C2) étant branché entre la barre négative (DCN) et le troisième noeud (N3) ;
- un inverseur (T1, T2) qui est raccordé pour l'alimentation en énergie à la barre positive (DCP) et à la barre négative (DCN) et qui fournit à une sortie d'inverseur (OUT), par rapport à la barre négative (DCN), une tension de sortie d'inverseur (U_{OUT}) qui a une fréquence d'oscillation d'inverseur beaucoup plus grande que la fréquence de réseau ;
- un réseau à réactance qui est raccordé à la sortie d'inverseur (OUT) et qui met à disposition des bornes de sortie (J3, J4) pour le raccordement d'au moins une source lumineuse, le réseau à réactance comprenant une self de lampe (L1) qui a une première et une deuxième borne et la première borne étant reliée à la sortie d'inverseur (OUT) ;
- un condensateur de pompage (C3) qui est relié entre le deuxième noeud (N2) et la sortie de redresseur positive (POS) ;
- une connexion entre le réseau à réactance et le deuxième noeud (N2), laquelle produit sur le deuxième noeud (N2), par rapport à la barre négative (DCN), une allure de tension qui a la fréquence d'oscillation d'inverseur, un dispositif de déphasage (L2) étant branché dans la connexion entre le réseau à réactance et le deuxième noeud, le dispositif de déphasage (L2) étant conçu pour provoquer une avance de plus de 90° ou un retard de la phase entre le point de connexion dans le réseau à réactance et le deuxième noeud (N2) ;
**caractérisé par le fait que** le point de connexion dans le réseau à réactance est la sortie d'inverseur (OUT), le dispositif de déphasage (L2) étant branché entre la sortie d'inverseur (OUT) et le deuxième noeud (N2).

2. Circuit selon la revendication 1,
**caractérisé par le fait que** le dispositif de déphasage est une inductance (L2).

3. Circuit selon l'une des revendications 1 ou 2,
**caractérisé par le fait que** le circuit comporte un deuxième condensateur de pompage (C4) et une sixième diode (D2), le deuxième condensateur de pompage (C4) étant relié au deuxième noeud (N2) et à la sortie de redresseur négative (NEG) et la sixième diode (D2) étant branchée entre la sortie de redresseur négative (NEG) et la barre négative (DCN).

4. Circuit selon l'une des revendications précédentes,
**caractérisé par le fait que** la barre positive (DCP) et la barre négative (DCN) sont reliées entre elles par l'intermédiaire d'un condensateur (C5).

5. Circuit selon l'une des revendications précédentes,
**caractérisé par le fait que** le réseau à réactance comporte un premier condensateur à résonance (C52) qui est relié par sa première borne à la barre positive (DCP) ou à la barre négative (DCN) et qui est relié par sa deuxième borne à la deuxième borne de la self de lampe (L1).

6. Circuit selon la revendication 5,
**caractérisé par le fait que** le réseau à réactance comporte un deuxième condensateur à résonance (C51) qui est relié par sa première borne à la connexion entre le réseau à réactance et le deuxième noeud (N2) et qui est relié par sa deuxième borne à la deuxième borne de la self de lampe (L1).

7. Circuit selon l'une des revendications précédentes,
**caractérisé par le fait que** le dispositif de déphasage (L2) est conçu pour, dans la zone des minima de la tension de réseau, maximiser la différence de tension (U_{DIFF}) entre la tension à la sortie d'inverseur (U_{OUT}) et la tension (U_{N2}) au deuxième noeud (N2).

8. Circuit selon l'une des revendications précédentes,
**caractérisé par le fait que** la source lumineuse (Lp) est une lampe à décharge gazeuse avec des électrodes pouvant être chauffées sachant que, lors du raccordement de la lampe à décharge gazeuse (Lp), une borne d'une électrode est reliée respectivement à une borne de sortie (J3, J4) du réseau à réactance et les autres bornes respectives (J5, J6) des électrodes sont reliées par l'intermédiaire d'un condensateur.

9. Circuit selon l'une des revendications précédentes,
**caractérisé par le fait que** le dispositif de déphasage comprend au moins un composant actif.
